Europäisches Patentamt

European Patent Office

Office européen des brevets

(19)

(11) Veröffentlichungsnummer: **0 180 721**
**B1**

(12) # EUROPÄISCHE PATENTSCHRIFT

(45) Veröffentlichungstag der Patentschrift:
16.09.87

(51) Int. Cl.⁴: **B 60 T 8/00**

(21) Anmeldenummer: **85109636.2**

(22) Anmeldetag: **31.07.85**

---

(54) **Antiblockiersystem.**

---

(30) Priorität: **03.11.84 DE 3440244**

(43) Veröffentlichungstag der Anmeldung:
**14.05.86 Patentblatt 86/20**

(45) Bekanntmachung des Hinweises auf die Patenterteilung:
**16.09.87 Patentblatt 87/38**

(84) Benannte Vertragsstaaten:
**DE FR GB IT NL SE**

(56) Entgegenhaltungen:
**DE - A - 2 726 738**

**VDI-ZEITSCHRIFT, Band 120, Nr. 22, November 1978,
Seiten 1066-1068; H.D. JORISSEN
"Anti-Blockier-System für Personenkraftwagen"**

(73) Patentinhaber: **WABCO Westinghouse
Fahrzeugbremsen GmbH, Am Lindener
Hafen 21 Postfach 91 12 80, D-3000 Hannover 91 (DE)**

(72) Erfinder: **Pannbacker, Helmut, Ing.-grad., Bruchweg 30,
D-3005 Hemmingen 5 (DE)**

(74) Vertreter: **Schrödter, Manfred, WABCO Westinghouse
Fahrzeugbremsen GmbH Am Lindener
Hafen 21 Postfach 91 12 80, D-3000 Hannover 91 (DE)**

---

## Beschreibung

Die Erfindung bezieht sich auf ein Antiblockiersystem gemäss dem Obergegriff des Patentanspruchs 1 (DE-A-27 26 738).

Ein derartiges System soll während einer Vollbremsung, insbesondere auf glatter Strassenoberfläche, ein Blockieren der gebremsten Räder verhindern. Hierdurch wird der Bremsweg des Fahrzeugs verkürzt und die Lenkfähigkeit bleibt erhalten.

Ein beginnendes Blockieren eines Rades wird im allgemeinen dadurch erkannt, dass seine Drehverzögerung (−b) über einen bestimmten Schwellwert anwächst. Dieser liegt über dem Wert, der bei der höchstmöglichen Verzögerung des Fahrzeugs ohne Radblockieren zu erwarten ist. Das Antiblockiersystem reagiert auf ein solches −b-Signal mit einer Bremsdrucksenkung im Bremszylinder des betreffenden Rades durch Ansteuerung des zugehörigen Magnet-Regelventils.

Es hat sich nun gezeigt, dass unerwünschterweise auch während einer normalen, gebremsten oder ungebremsten Fahrt Regelsignale erzeugt werden können, und damit die Magnetventile kurzzeitig ansprechen. Dies führt zu einer schädlichen Abnutzung der Magnetventile.

Die Ursache solcher Regelsignale ist meist das sogenannte Achsschwingen. Hierunter versteht man eine durch starke Fahrbahnunebenheiten verursachte Drehschwingung der Räder mit einer Frequenz von etwa 8-10 Hz.

Ein solches Achsschwingen kann auch während einer (ungeregelten) Teilbremsung auftreten und führt dann durch das hierdurch ansprechende Magnetventil zu einem unerwünschten Druckverlust der Bremszylinder.

Um dieses Verhalten eines elektronischen Antiblockiersystem (ABS) abzustellen, ist es denkbar, einen Druckschalter im Bremskreis des Fahrzeugs einzubauen und mit diesem das ABS erst bei Vorliegen eines bestimmten Bremsdruckes zu aktivieren. Dies geschieht dadurch, dass bei Erreichen dieses Bremsdruckes eine vorher konstant grössere Schwelle für die Radverzögerung −b auf einen niedrigeren Wert zurückgeschaltet wird. Diese Anordnung hat jedoch den Nachteil, dass durch den Druckschalter, die elektrische Verbindungsleitung zur ABS-Elektronik und durch den Steckanschluss ein gewisser Aufwand notwendig ist. Ferner kann es bei Teilbremsungen trotzdem zu unnötigen Magnetbetätigungen kommen. Weiter besteht auch die Gefahr, dass bei defektem Druckschalter das Antiblockiersystem zu spät anspricht.

Es ist weiter bekannt, ein Achsschwingen durch das Auftreten eines +b-Signals (Raddrehbeschleunigung) zu erkennen, und daraufhin die −b-Schwelle zu erhöhen (DE-A-27 26 738). Hierdurch wird die Erzeugung von Fehl-Regelsignalen verhindert. Es besteht jedoch die Gefahr, dass durch die erhöhte −b-Schwelle eine ev. anschliessende geregelte Bremsung nicht optimal abläuft.

Der Erfindung liegt die Aufgabe zugrunde, bei einem Antiblockiersystem der eingangs genannten Art das unerwünschte Ansprechen der Magnetventile infolge von Achsschwingen mit geringem Aufwand zu verhindern, ohne dass eine anschliessende geregelte Bremsung negativ beeinflusst wird.

Diese Aufgabe wird durch die im Patentanspruch 1 enthaltene Erfindung gelöst. Die Unteransprüche enthalten zweckmässige Weiterbildungen der Erfindung.

Die Erfindung wird im folgenden anhand einer Zeichnung näher erläutert. Diese zeigt in

Fig. 1 ein vereinfachtes Blockschaltbild des erfindungsgemässen Antiblockiersystems;

Fig. 2 ein Diagramm der Radgeschwindigkeit und der Fahrzeug-Referenzgeschwindigkeit über der Zeit während eines Achsschwing-Vorganges;

Fig. 3 ein Diagramm der Radgeschwindigkeit und der Fahrzeug-Referenzgeschwindigkeit über der Zeit während einer geregelten Bremsung.

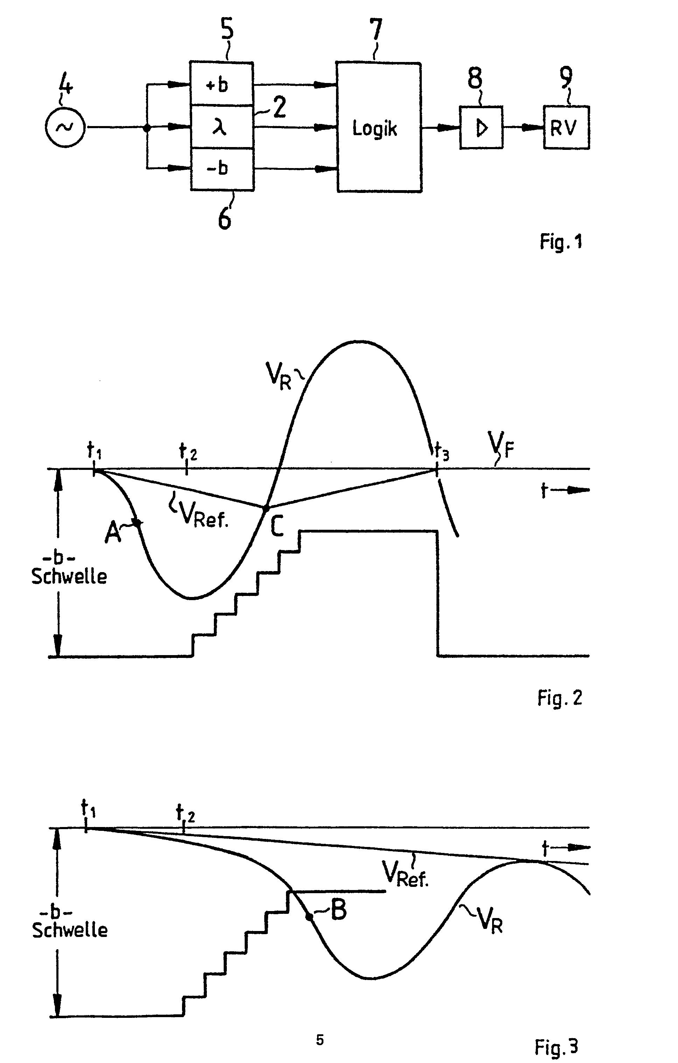

In Fig. 1 ist schematisch das Blockschaltbild des erfingungsgemässen Antiblockier-Systems dargestellt. Die Signale eines Radsensors 4 werden zwei Schwellwert-Stufen für +b (Schwelle 5) und −b (Schwelle 6) sowie einer Schwellwert-Stufe 2 für den Radschlupf λ zugeführt. Bei Überschreitung dieser Schwellen wird in einer Logik 7 nach einem vorgegebenen Programm ein Blockierschutz-Steuersignal erzeugt und nach Verstärkung in einem Verstärker 8 einem Regelventil 9 (RV) des betreffenden Rades zugeführt. Hierdurch wird das Rad bei Blockierneigung (−b-Signal) vom Bremsdruck entlastet.

Die Schwellwertstufe 6 für die Radverzögerung −b ist im normalen Betrieb auf einen hohen Wert eingestellt. Die Stufe 6 enthält eine Einrichtung, die erkennt, ob sich die Radgeschwindigkeit von der Fahrzeug-Referenzgeschwindigkeit löst.

In Fig. 2 ist schematisch über der Zeit t die Radgeschwindigkeit $V_R$ für ein beginnendes Achsschwingen aufgetragen. Das Achsschwingen beginnt im Zeitpunkt $t_1$. Hier löst sich die Radgeschwindigkeit $V_R$ von der Fahrzeug-Referenzgeschwindigkeit ($V_{ref}$) nach unten.

Die Fahrzeug-Referenzgeschwindigkeit $V_{ref}$ ist eine innerhalb der Blockierschutz-Elektronik nachgebildete Grösse für die tatsächliche Fahrzeug-Geschwindigkeit $V_F$. Die Referenzgeschwindigkeit $V_{ref}$ folgt verzögert der Radgeschwindigkeit $V_R$.

Die −b-Schwelle weist im Normalfall, d.h. bei ungebremster bzw. ungeregelter Fahrt einen relativ hohen Wert auf. Hierdurch wird ein −b-Signal, das infolge des Achsschwingens etwa im Punkt A erzeugt worden wäre, unterdrückt.

Nach einer vorgegebenen Zeit wird ab dem Zeitpunkt $t_2$ die −b-Schwelle in Stufen verkleinert, da die Achsschwingamplitude ab diesem Zeitpunkt ebenfalls kleiner wird. Sobald die Geschwindigkeiten $V_R$ und $V_{ref}$ wieder übereinstimmen (Zeitpunkt $t_3$), wird die −b-Schwelle wieder auf den alten Wert erhöht. Die Steigung der Fahrzeugreferenzgeschwindigkeit nach dem Schnittpunkt C ist so gewählt, dass die Referenzgeschwindigkeit

zum Zeitpunkt $t_3$ etwas unter der Fahrzeuggeschwindigkeit liegt.

In Fig. 3 ist ein Blockierschutz-Regelvorgang über der Zeit t dargestellt. Dieser hat eine erheblich grössere Periodendauer als das Achsschwingen. Im Zeitpunkt $t_1$ beginnt das Rad, sich von der Fahrzeug-Referenzgeschwindigkeit $V_{ref}$ zu lösen. Ab dem Zeitpunkt $t_2$ wird wieder die −b-Schwelle in Stufen verringert. Im Punkt B wird diesmal ein −b-Signal erzeugt, da hier die −b-Schwelle bereits einen geringen Wert aufweist. Im Folgenden wird durch die Logik 7 die Bremse gelöst, wodurch sich die Radgeschwindigkeit $V_R$ wieder an die Fahrzeug-Referenzgeschwindigkeit $V_{ref}$ annähert.

Gemäss einer Weiterbildung der Erfindung kann man die Elektronik des Antiblockiersystems auch so ausbilden, dass die Wiedererhöhung des −b-Schwellwertes während einer laufenden geregelten Bremsung ausgeschlossen wird. Dies geschieht durch ein Signal der Logik 7 an die Schwellwertstufe 6.

Weiter ist es auch möglich, den erhöhten Schwellwert der Schwellwertstufe 6 nur dann einzuschalten, wenn eine durch Achsschwingen erzeugte Radbeschleunigung +b einen vorgegebenen Wert übersteigt. Dies geschieht durch ein Signal der Schwellwertstufe 5 an die Schwellwertstufe 6.

## Patentansprüche

1. Antiblockiersystem mit Radsensoren (4), mit Einrichtungen zur Erzeugung von Beschleunigungs- und Verzögerungssignalen und mit Schwellwertstufen (5, 6), die bei Überschreitung von festgelegten Beschleunigungen oder Verzögerungen der Räder über eine Logik (7) Regelsignale an Magnetventile (9) abgeben, *dadurch gekennzeichnet*, dass die Schwellwertstufe (6) für die Verzögerungs-Signale (−b) einen gegenüber einem normalen, für eine geregelte Bremsung günstigen Wert erhöhten Schwellwert aufweist, und dass der erhöhte Schwellwert nach dem Lösen der Radgeschwindigkeit ($V_R$) von der Fahrzeug-Referenzgeschwindigkeit ($V_{ref}$) in Stufen verkleinerbar ist.

2. Antiblockiersystem nach Anspruch 1, *dadurch gekennzeichnet*, dass die Erhöhung des Schwellwertes für die Verzögerungs-Signale (−b) während einer geregelten Bremsung unterdrückbar ist.

3. Antiblockiersystem nach Anspruch 1 bis 2, *dadurch gekennzeichnet*, dass der erhöhte Schwellwert der Schwellwertstufe (6) nur dann eingeschaltet ist, wenn eine durch Achsschwingen erzeugte Radbeschleunigung (+b) einen vorgegebenen Wert übersteigt.

## Claims

1. Anti-lock system having wheel sensors (4), having devices for generating acceleration and deceleration signals and having threshold value stages (5, 6) which emit control signals to solenoid valves (9) *via* a logical unit (7) when predetermined accelerations or decelerations of the wheels are exceeded, *characterised in that* the threshold value stage (6) for the deceleration signals (−b) has a threshold value that is increased with respect to a normal value that is favourable for controlled braking, and that the increased threshold value can be reduced in stages after the wheel speed ($V_R$) has been dissociated from the vehicle reference speed ($V_{ref}$).

2. Anti-lock system according to claim 1, *characterised in that* the increase in the threshold value for the deceleration signals (−b) can be suppressed during controlled braking.

3. Anti-lock system according to claims 1 and 2, *characterised in that* the increased threshold value of the threshold value stage (6) is switched in only when a wheel acceleration (+b) produced by axle vibrations exceeds a predetermined value.

## Revendications

1. Système antiblocage à détecteurs de roue (4), comportant des dispositifs pour produire des signaux d'accélération et de décélération et comportant des étages de valeur de seuil (5, 6) qui, en cas de dépassement des accélérations ou des décélérations déterminées des roues, envoient, par l'intermédiaire d'un circuit logique (7), des signaux de régulation à des bobines électromagnétiques (9), caractérisé en ce que l'étage de valeur de seuil (6) pour les signaux de décélération (−b) présente une valeur de seuil relevée par rapport à une valeur normale, favorable pour un freinage régulé; et en ce que, après que la vitesse de la roue ($V_R$) s'est écartée de la vitesse de référence du véhicule ($V_{réf}$), on peut à nouveau diminuer par échelons la valeur de seuil ainsi relevée.

2. Système antiblocage selon la revendication 1, caractérisé en ce que le relèvement de la valeur de seuil pour les signaux de décélération (−b) peut être supprimé pendant un freinage régulé.

3. Système antiblocage selon les revendications 1 à 2, caractérisé en ce que la valeur de seuil relevée de l'étage de valeur de seuil (6) n'est mise en circuit que lorsqu'une accélération de la roue (+b) produite par une vibration de l'essieu dépasse une valeur prescrite.

0 180 721

Fig. 1

Fig. 2

Fig. 3

5